# EUROPEAN PATENT APPLICATION

(11) **EP 1 715 598 A1**
(43) Date of publication of application: **25.10.2006**
(21) Application number: 05709529.1
(22) Date of filing: 01.02.2005
(51) Int. Cl.: H04B 7/26, H04B 10/10, H04B 10/105, H04B 10/22, H04M 1/00, H04M 1/02, H04M 1/21, H04Q 7/38

(54) **PORTABLE TERMINAL WITH BUILT-IN CAMERA FOR VISIBLE LIGHT COMMUNICATION**

(30) Priority: 02.02.2004 JP 2004026067
(71) Applicant: Nakagawa Laboratories, Inc., Tokyo 141-0031 (JP)
(72) Inventor: NAKAGAWA, Masao, Yokohama-shi Kanagawa 2250001 (JP); HARUYAMA, Shinichiro, Zushi-shi, Kanagawa 2490004 (JP)
(74) Representative: Klein, Peter
(86) International application number: PCT/JP2005/001383
(87) International publication number: WO 2005/074168

(57) **Abstract**

The present invention provides a camera-equipped cellular terminal capable of receiving visible light communication. In order to receive information from visible light, a light receiving unit (24) for visible light pointing to the same direction as a light receiving lens of the camera (21) is provided other than a camera (21) of a conventional camera-equipped cellular terminal (20). This light receiving unit (24) receives information from the visible light. This light receiving unit (24) may be configured by a photodiode or the like. When the camera (21) is used as a finder to display an illuminating device conducting visible light communication in a display of the camera, whether the light receiving unit 24 can receive information through visible light communication is determined.

## Description

### TECHNICAL FIELD

The present invention relates to a camera-equipped cellular terminal configured to receive visible light communication.

### BACKGROUND ART

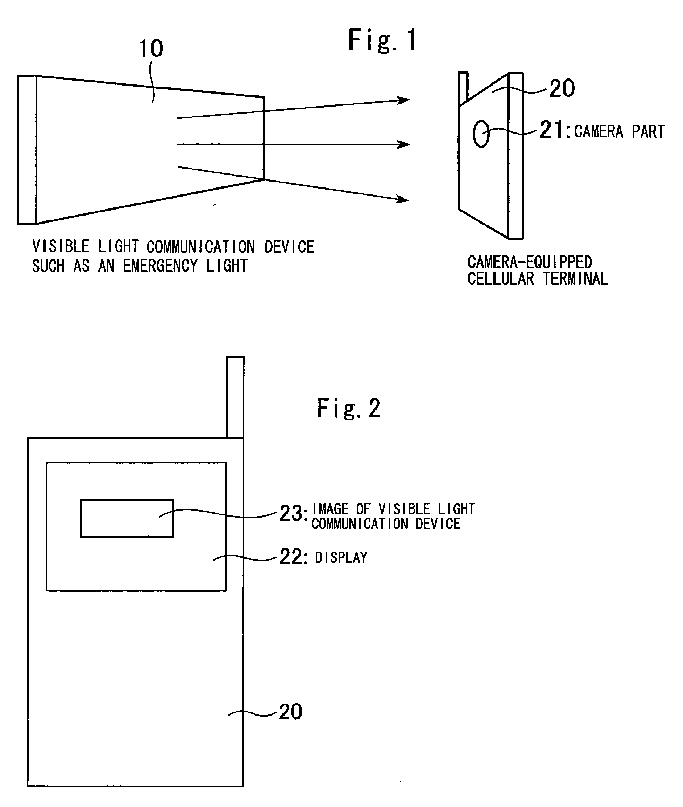

Cellular phones are a key element supporting Japan's industries today. 70 million cellular phone units are being used in Japan. The cellular phone terminal does not only function as a telephone, but includes an infrared data reader and a camera to take pictures, and may even recognize images. Furthermore, having an RF-ID tag is becoming more frequent. Possession of a cellular terminal is equivalent to having a credit card, and even an identification card in some cases. The cellular terminal takes the market position of personal computers of the 1990s. In this state, cameras have a function of receiving external visible images and are widely prevalent. A system including a cellular terminal, which extracts information from a communication device (e.g., a communication device configured to modulate at a high speed an LED used for displaying or lighting an emergency light or advertising light) using visible light by expanding such function of a camera, is made experimentally, as in FIG. 1.

In the case of FIG. 1, pointing the camera of the cellular terminal towards light from a visible light communication device (e.g., emergency light) while watching an image on a display located on the right side hidden part allows provision of information from the visible light (illuminative light).

The image provided from the camera 21 is displayed on the display 22 of the cellular terminal 22. While an image 23 of the visible light communication device such as an emergency light taken by the camera is displayed, the image taken by the camera is sampled at high speed when a button of the cellular terminal 20 is pushed so as to instruct to receive visible light communication, allowing demodulation of the modulated visible light, and resulting in provision of information from the illuminative light.

However, the camera used for visible light communication needs a high-speed sampling frequency, and is thus of a special type. This is an excessive specification as camera's functions and is thus expensive.

When using a typical camera for visible light communication, information transfer speed for visible light communication is limited due to a low-speed sampling frequency.

Note that Non-patent Document 1 should be referred for detection of information sent through visible light communication using a digital camera.
[Non-patent Document 1]
Matsushita, Nobuyuki et al, 'ID Cam: Smart Camera Capable of Photographing Scenes and IDs Simultaneously' Information Processing Society of Japan Journal Vol. 43 No. 6, pp. 3664-3674, (2002-12)

### DISCLOSURE OF THE INVENTION

### Problem to be Solved by the Invention

The objective of the present invention is to provide a camera-equipped cellular terminal capable of visible light communication without using a camera having fast sampling speed.

### Means for Solving the Problem

In order to achieve the above-given objective of the present invention, a camera attached cellular terminal according to the present invention includes a visible light receiving unit provided separate from the camera, which receives visible light information.

The light receiving unit is deployed pointing in the same direction as the camera lens of the cellular terminal, and may be configured so as to receive visible light communication when a device sending information through the visible light is portrayed in the display.

### [Effects of the Invention]

Provision of the light receiving unit for visible light communication in addition to the camera allows high-speed reception of information through the visible light communication without any constraints for the camera.

Furthermore, when the camera is used as a finder to display, the light receiving unit may receive information through the visible light communication.

### BRIEF DESCRIPTION OF DRAWINGS

FIG. 1 is a diagram showing a structure of a conventional camera-equipped cellular terminal;
FIG. 2 is a diagram describing manipulations of a camera-equipped cellular terminal for receiving information through visible light communication;
FIG. 3 is a diagram showing a structure of the camera-equipped cellular terminal provided with a light receiving unit; and
FIG. 4 is a block diagram showing a function of the camera-equipped cellular terminal provided with the light receiving unit.

### BEST MODE FOR CARRYING OUT THE INVENTION

An embodiment of the present invention is described using the appended drawings.

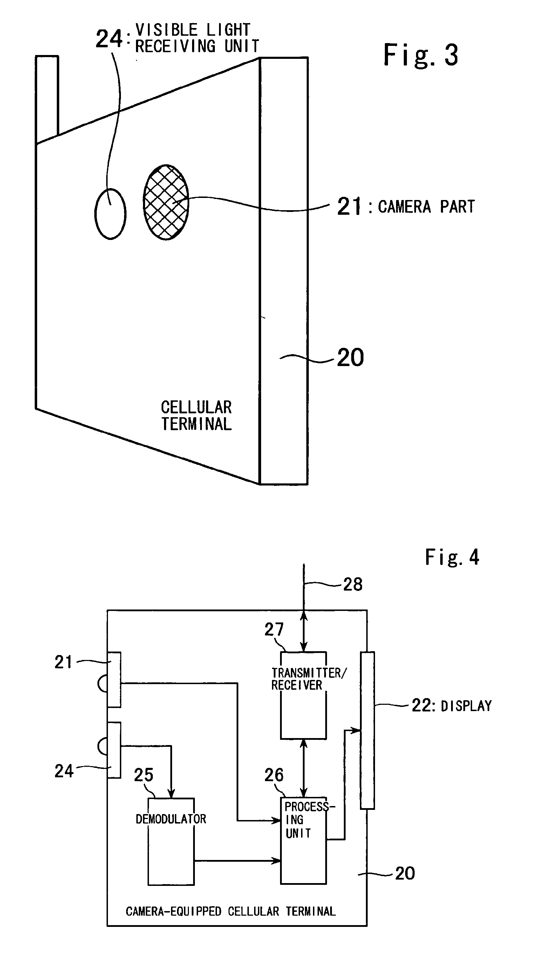

FIGS. 3 and 4 show the embodiment of the present invention.

As shown in FIG. 3, in order to receive information from visible light (including illuminative light) separate from a camera 21 of a conventional camera-equipped cellular terminal 20, a visible light receiving unit 24 pointing in the same direction as a light receiving lens of the camera 21 is provided. This light receiving unit 24 receives visible light information. This light receiving unit 24 may be configured by a photodiode or the like.

FIG. 4 is a block diagram showing a function of the camera-equipped cellular terminal 20 of FIG. 3. In FIG. 4, an image taken by the camera 21 is processed by a processing unit 26 and then displayed on a display 22. Information from a visible light communication device (e.g., an illuminating device such as an emergency light) is converted to an electronic signal by the light receiving unit 24, and then displayed, for example, on the display 22 by the processing unit 26. Audio related microphones, speakers, buttons, and the like naturally included on the cellular terminal 20 are not shown in FIG. 4. Note that the information from the visible light communication device may be voice synthesized so as to be heard from speakers instead of being displayed on the display 22. Furthermore, this light receiving unit 24 may be configured by a photodiode or the like.

The structures shown in FIGS. 3 and 4 resemble a structure known as a twin-lens reflex system in camera technology. With a twin-lens reflex camera, one of two lenses is used mainly for photographing of images, and the other is used as a finder for a person to look at a photographic subject. Even with the structure of the embodiment of the present invention shown in FIG. 3, the fact that a visible light communication device (an illuminating device such as an emergency light) in the display 22 is displayed by pointing the cellular terminal 20 in the direction of the visible light communication device such as an emergency light means that a sufficient amount of illuminative light is irradiated from the visible light communication device, which generates information, to the light receiving unit 24 provided separate from the camera 21, as shown in FIG. 2. Namely, in this case, the camera 21 functions as a finder, which allows a person to look at the visible light communication device as a so-called photographic subject. Note that when portraying the visible light communication device in a specified region of the display 22, a positional relationship of the camera 21 and the light receiving unit 24 may be set to an optimum direction for visible light communication.

Conventionally, since information sent through visible light communication has been captured by a camera attached to a cellular terminal, the need for replacing that camera with one with an especially fast sampling speed occurs. The structure of FIG. 3 configures the camera 21 as a camera and the light receiving unit 24 as a light receiving unit for visible light communication, and thus allowing high-speed reception of information through visible light communication without any constraints for the camera.

Moreover, by setting the camera and the light receiving unit to point in the same direction and displaying an illuminating device, which conducts visible light communication, on the camera display using the camera as a finder, whether the light receiving unit can receive information through visible light communication is determined. It is sufficient for the light receiving unit 24 for visible light communication to only detect light intensity. Therefore, as long as the picture of the visible light communication device taken by the camera is portrayed in the center of the screen, setting so that information resulting from modulating and transmitting illuminative light can be detected becomes easier.

## Claims

1. A camera attached cellular terminal, comprising
a light receiving unit for visible light provided in addition to the camera; wherein
the light receiving unit receives information from visible light.

2. The cellular terminal of Claim 1, wherein
the light receiving unit is set so as to point in the same direction as a lens of the camera of the cellular terminal, and
communication through visible light is received when a device configured to transmit information through visible light is portrayed in a display of the camera.
